# EUROPEAN PATENT APPLICATION

(11) **EP 4 425 186 A1**
(43) Date of publication of application: **04.09.2024**
(21) Application number: 22886901.2
(22) Date of filing: 21.10.2022
(51) Int. Cl.: G01N 35/00, G01N 35/02, G01N 37/00

(54) **MICRO FLOW PASSAGE DEVICE**

(30) Priority: 26.10.2021 JP 2021174604
(71) Applicant: SEKISUI CHEMICAL CO., LTD., Osaka-shi Osaka 530-8565 (JP); Sekisui Medical Co., Ltd., Tokyo 103-0027 (JP)
(72) Inventor: KOUNO, Takamasa, Tokyo 103-0027 (JP); KINOSHITA, Takuya, Mishima-gun Osaka 618-0021 (JP); TAKAMATSU, Tatsunori, Tokyo 103-0027 (JP)
(74) Representative: Hoffmann Eitle
(86) International application number: PCT/JP2022/039322
(87) International publication number: WO 2023/074574

(57) **Abstract**

A microchannel device has a first channel system including a liquid holder and a second channel system including a dry reagent holder, with the first channel system and the second channel system being shut off from each other in a chip body. The lid member has a first groove in a contact surface to face the chip body. The lid member, when attached to the chip body, allows the first channel system and the second channel system to communicate with each other via the first groove.

## Description

### Technical Field

The present invention relates to a microchannel device.

### Background Art

Devices equipped with microchannels are widely used for blood tests, genetic tests, and other tests as well as biochemical analysis to control liquid delivery of various specimens, samples, or the like, and to control their reactions. The microchannel device for such testing and analysis has a channel structure that allows a plurality of liquids to be combined and mixed with each other. There have been various proposals, including a configuration that uses a film-packed liquid reagent disposed in the device and a configuration that uses a liquid reagent encapsulated in a channel in advance and sealed by a sealing film or the like.

For example, PTL 1 discloses a microchip that includes a recess for containing a liquid reagent, and a sealing film having an end thereof drawn out of the microchip. The recess is formed in a bottom surface of a groove. The sealing film is adhered to the bottom surface of the groove so as to cover an opening of the recess entirely. PTL 2 discloses a test device for performing liquid transfer and reactions. The test device includes a pipette tip containing a liquid reagent, a housing having a plunger assembly, and a reaction chamber. The housing is configured to be engageable with the reaction chamber. When the housing is engaged with the reaction chamber, the pipette tip pierces a seal on a microtube that encapsulates a dry reagent. With the movement of the pipette tip, the test device initiates a reaction.

### Citation List

### Patent Literature

PTL 1: JP 2009-168667 A
PTL 2: JP 5994158 B2

### Summary of Invention

### Technical Problem

The test device disclosed in PTL 2 accommodates the liquid reagent and the dry reagent separately in individual containers and combines these reagents in use. It is hence possible to manage storage of the liquid reagent in a non-dry state and storage of the dry reagent in a dry state. However, the test device that includes a plurality of components is inevitably large and has a risk of losing the components that are stored separately. These disadvantages result in low usability.

The present invention is made in view of the above-mentioned disadvantages, and aims to provide a microchannel device that can hold both a liquid which prefers a non-dry state and a dry reagent which prefers a dry state, that can maintain the preferable storage conditions, that can shut off the liquid and the dry reagent from each other, and that can combine them together.

### Solution to Problem

The present invention for achieving the above-mentioned object provides a microchannel device that includes: a chip body having a microchannel; and a lid member attachable to the chip body, wherein the microchannel includes a first channel system having a liquid holder that encapsulates a liquid, and a second channel system having a dry reagent holder that encapsulates a dry reagent, with the first channel system and the second channel system being shut off from each other in the chip body, wherein the lid member has a first groove formed in a contact surface to face the chip body, and wherein the lid member, when attached to the chip body, allows the first channel system and the second channel system to communicate with each other via the first groove.

The microchannel device that includes the above-mentioned specified matter can shut off the liquid holder and the dry reagent holder from each other, and can thereby store the liquid in a non-dry state and store the dry reagent in a dry state. In use, the microchannel device can easily allow the liquid holder and the dry reagent holder to communicate with each other.

Preferably in the microchannel device of the above configuration, the chip body has a contact surface to face the lid member, a first connection port that constitutes an end of the first channel system, and a second connection port that constitutes an end of the second channel system, with the first connection port and the second connection port being open to the contact surface to face the lid member. Also preferably, the first groove has a recessed groove-like shape configured to connect the first connection port to the second connection port.

Preferably in the microchannel device of the above configuration, the first connection port and the second connection port are sealed by a sealing member that is adhesive to and removable from the chip body. Also preferably, the lid member is attached to the chip body from which the sealing member has been removed.

Preferably in the microchannel device of the above configuration, the second channel system has a desiccant holder that encapsulates a desiccant and that communicates with the dry reagent holder.

Preferably in the microchannel device of the above configuration, the lid member, when attached, shuts off the communication between the dry reagent holder and the desiccant holder. In this case, the lid member preferably has a protrusion formed on the contact surface to face the chip body; the chip body preferably has a recessed communication part that is formed in a contact surface to face the lid member and that communicates with the dry reagent holder and the desiccant holder; and the protrusion, when fitting in the communication part, preferably shuts off the communication.

The microchannel device of the above configuration may further include a constricted part that shows a high flow resistance and that is provided between the dry reagent holder and the desiccant holder.

Preferably in the microchannel device of the above configuration, the microchannel further includes a third channel system provided downstream of the dry reagent holder in the second channel system that is provided downstream of the first channel system.

Preferably in the microchannel device of the above configuration, the third channel system and the second channel system are shut off from each other in the chip body. Also preferably, the lid member has a recessed second groove formed in the contact surface to face the chip body. Also preferably, the lid member is configured, when attached to the chip body, to allow the third channel system and the second channel system to communicate with each other via the second groove.

In the microchannel device of the above configuration, the third channel system may be configured to communicate with the second channel system by being connected to the second channel system between the dry reagent holder and the desiccant holder.

### Advantageous Effects of Invention

The present invention can shut off the liquid holder encapsulating a liquid and the dry reagent holder encapsulating a dry reagent from each other, and can thereby store the liquid in a non-dry state and store the dry reagent in a dry state. In use, the present invention can combine the liquid and the dry reagent with each other in a simple manner.

### Brief Description of Drawings

Fig. 1 is a sectional view schematically showing a microchannel device according to Embodiment 1 of the present invention.
Fig. 2 is a plan view showing a chip body of the microchannel device.
Fig. 3 is a sectional view showing the chip body of the microchannel device, taken along the line A-A in Fig. 2.
Fig. 4 is a sectional view showing the chip body of the microchannel device, taken along the line B-B in Fig. 2.
Fig. 5 is a sectional view schematically showing the microchannel device, taken along the Y direction.
Fig. 6 is a sectional view showing the microchannel device, taken along the X direction, with a lid member attached to the chip body.
Fig. 7 is a sectional view showing the microchannel device, taken along the Y direction, with the lid member attached to the chip body.
Fig. 8 is a plan view for explaining the microchannel device in use.
Fig. 9A is a plan view schematically showing a main part of a chip body of a microchannel device according to Embodiment 2 of the present invention.
Fig. 9B is a plan view for explaining the microchannel device in use.
Fig. 10A is a plan view schematically showing a main part of a chip body of a microchannel device according to Embodiment 3 of the present invention.
Fig. 10B is a plan view for explaining the microchannel device in use.
Fig. 11A is a plan view schematically showing a main part of a chip body of a microchannel device according to Embodiment 4 of the present invention.
Fig. 11B is a plan view for explaining the microchannel device in use.
Fig. 12 is a sectional view schematically showing a microchannel device according to Embodiment 5 of the present invention.
Fig. 13 is a plan view showing a chip body of the microchannel device.

### Description of Embodiments

Microchannel devices 1 according to Embodiments of the present invention are described with reference to the drawings.

### (Embodiment 1)

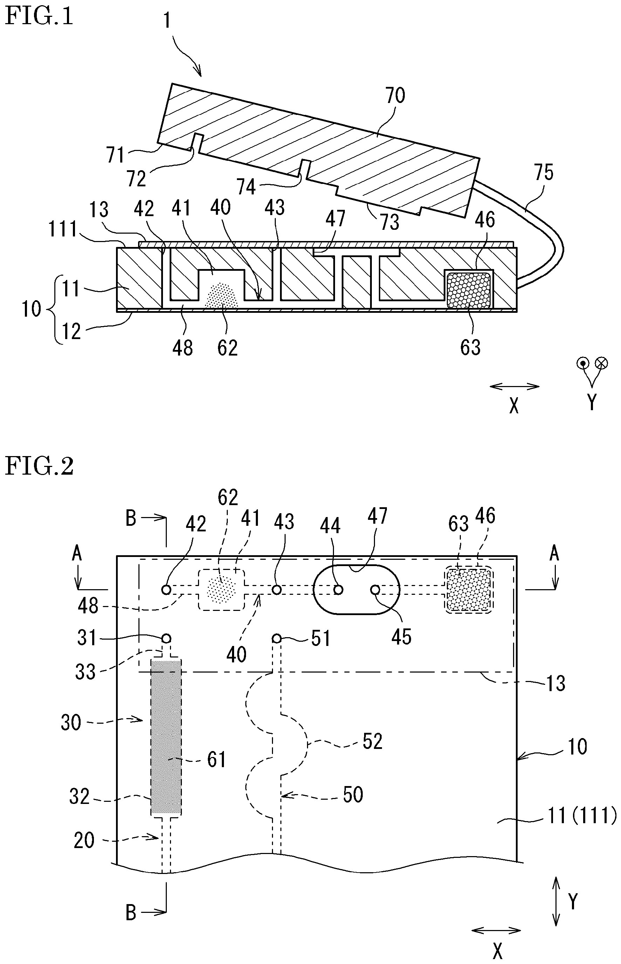

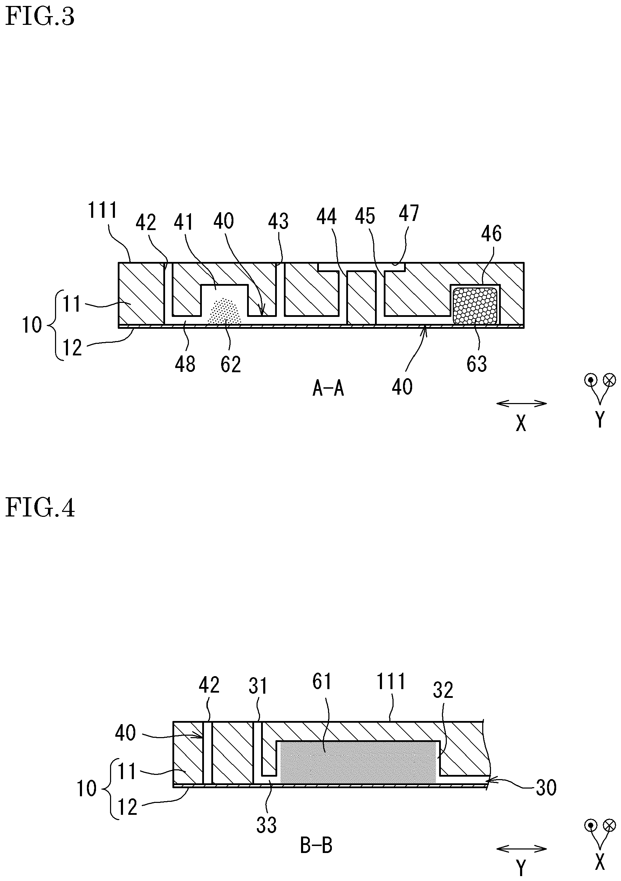

Fig. 1 is a sectional view schematically showing a microchannel device 1 according to Embodiment 1 of the present invention. Fig. 2 is a plan view showing a main part of a chip body 10 of the microchannel device 1. Fig. 3 and Fig. 4, showing the chip body 10 of the microchannel device 1, are sectional views taken along the line A-A in Fig. 2 and the line B-B in Fig. 2, respectively.

The microchannel device 1 is a device for testing or analysis, and has the chip body 10 and a lid member 70 to be attached to the chip body 10, as shown in Fig. 1 and Fig. 2. The microchannel device 1 is configured to mix and deliver, for example, a liquid reagent 61 and a dry reagent 62 encapsulated in the chip body 10, for implementation of a desired process.

As shown in Fig. 2, the chip body 10 has a rectangular plate-like shape. As shown in Fig. 3 and Fig. 4, the chip body 10 includes a first substrate 11 and a second substrate 12. In the illustrated Embodiment, the second substrate 12 is laminated and integrally joined on a bottom surface of the first substrate 11. The first substrate 11 and the second substrate 12 can be formed by injection molding of a synthetic resin or may be formed by lamination of a plurality of synthetic resin sheets.

Note that the overall shape of the chip body 10 is not limited to a rectangular plate-like shape, but may be a disc shape, a sector shape, or any other shape. In the following description, also note that the directions of components of the microchannel device 1 are based on X and Y directions that are orthogonal to each other as shown in Fig. 2. These directions are specified merely for convenience of description, and are not intended to limit the orientation or other conditions for use of the microchannel chip 1.

As shown in Fig. 2, the first substrate 11 of the chip body 10 is provided with a fine channel, a microchannel 20. The microchannel 20 includes a first channel system 30 extending in the Y direction, a second channel system 40 extending in the X direction that crosses the first channel system 30, and a third channel system 50 extending in the Y direction that crosses the second channel system 40.

The first channel system 30 is a channel that delivers, for example, a liquid injected from a liquid introduction port or the like provided further upstream. The first channel system 30 is provided with a liquid holder 32 that encapsulates the liquid reagent 61. The liquid reagent 61 is liquid at room temperature, and is preferably stored in a non-dry state.

The liquid holder 32 has a constricted structure, with an upstream channel thereto and a downstream channel therefrom being constricted. The channel cross section of, for example, a downstream channel 33 communicating with a downstream side of the liquid holder 32 is smaller than that of the liquid holder 32. This structure enables the liquid holder 32 to hold the liquid reagent 61 stably, and to reduce a dead volume in comparison with the case of holding the liquid reagent 61 with use of a film pack or the like.

The downstream channel 33 communicates with a first connection port 31 that opens to a top surface 111 of the first substrate 11, as shown in Fig. 4. The first connection port 31 constitutes a downstream end of the first channel system 30.

Referring back to Fig. 2, the second channel system 40 has, at an upstream end thereof, a second connection port 42 that opens to the top surface 111 of the first substrate 11. In the illustrated Embodiment, the second connection port 42 is aligned on a Y-direction extension of the first connection port 31. The second channel system 40 further has an upstream channel 48 communicating with the second connection port 42, and a dry reagent holder 41 encapsulating the dry reagent 62 and communicating with the upstream channel 48.

The dry reagent holder 41 also has a constricted structure and can stably hold the dry reagent 62 inside. The dry reagent 62 is preferably stored in a dry state at room temperature. For example, the dry reagent 62 is a beaded enzyme or a beaded reagent mixture that can be kept under ambient temperature. The dry reagent 62 is activated on contact with the liquid reagent 61.

As shown in Fig. 2, the second channel system 40 is provided with a desiccant holder 46 encapsulating a desiccant and communicating with the dry reagent holder 41. This configuration keeps the dry reagent 62 in a dry state. In the illustrated Embodiment, the desiccant holder 46 is positioned at a downstream end of the second channel system 40. A communication part 47, provided between the dry reagent holder 41 and the desiccant holder 46, allows selection of a communicating state and a shut-off state therebetween.

As shown in Fig. 3, the communication part 47 is formed as a recess in the top surface 111 of the first substrate 11 of the chip body 10. A fourth connection port 44 communicating with the dry reagent holder 41, and a fifth connection port 45 communicating with the desiccant holder 46 are open to the communication part 47. A third connection port 43, provided between the fourth connection port 44 and the dry reagent holder 41, opens to the top surface 111 of the first substrate 11.

As shown in Fig. 1 and Fig. 2, a cover tape 13 is provided on the top surface 111 of the chip body 10, as an adhesive/removable sealing member. The cover tape 13 serves to seal the second connection port 42 and the third connection port 43 that are provided in the second channel system 40 and open to the top surface 111 of the chip body 10. With the communication part 47 being covered by the cover tape 13, the fourth connection port 44 and the fifth connection port 45 are allowed to communicate with each other. As a sealing member, the cover tape 13 may be a highly chemical-resistant, easily adhesive/peelable tape such as an aluminum tape, etc.

According to this arrangement, the second channel system 40 allows the dry reagent holder 41 and the desiccant holder 46 to communicate with each other via the communication part 47 as shown in Fig. 1, and establishes a closed channel by being shut off from the first channel system 30 and the third channel system 50. Eventually, the dry reagent 62 encapsulated in the dry reagent holder 41 is kept in a preferable dry state by a desiccant 63.

Referring back to Fig. 2, the third channel system 50 has, at an upstream end thereof, a sixth connection port 51 that opens to the top surface 111 of the first substrate 11. The third channel system 50 is communicably provided downstream of the dry reagent holder 41 in the second channel system 40 that is provided downstream of the first channel system 30.

In the illustrated Embodiment, the sixth connection port 51 is aligned on a Y-direction extension of the third connection port 43 in the second channel system 40. The third channel system 50 includes a mixing channel 52 that communicates with the sixth connection port 51. The mixing channel 52 includes a plurality of widened portions having a widened channel cross section. Liquids mixed in the mixing channel 52 are delivered to a downstream side of the mixing channel 52.

The cover tape 13 of the chip body 10 is large enough to cover the first connection port 31 in the first channel system 30; the second connection port 42, the third connection port 43, and the communication part 47 in the second channel system 40; and the sixth connection port 51 in the third channel system 50. With the cover tape 13, as a sealing member, adhering to the chip body 10, the first channel system 30 and the second channel system 40 are shut off from each other. Similarly, the second channel system 40 and the third channel system 50 are shut off from each other, and the first channel system 30 and the third channel system 50 are shut off from each other.

The top surface 111 of the chip body 10 serves as a contact surface to face the lid member 70. As shown in Fig. 1, the lid member 70 is joined with the chip body 10 via a joint 75, and is attachable to the chip body 10.

The lid member 70 has a contact surface 71 as a bottom surface thereof. The contact surface 71 is a surface to make contact with the first substrate 11 (the top surface 111) of the chip body 10. The lid member 70 is large enough to cover the first connection port 31 in the first channel system 30; the second connection port 42, the third connection port 43, and the communication part 47 in the second channel system 40; and the sixth connection port 51 in the third channel system 50. For example, the lid member 70 is preferably made of an elastic or viscous material including a silicone-based rubber or a synthetic resin such as an elastomer.

As shown in Fig. 1, the contact surface 71 of the lid member 70 has a first groove 72 and a second groove 74. The first groove 72 and the second groove 74 extend parallel to the Y direction and do not cross each other. In the illustrated Embodiment, the first groove 72 and the second groove 74 have a common cross section, which is a fine groove-like cross section similar to the microchannel 20 in the chip body 10.

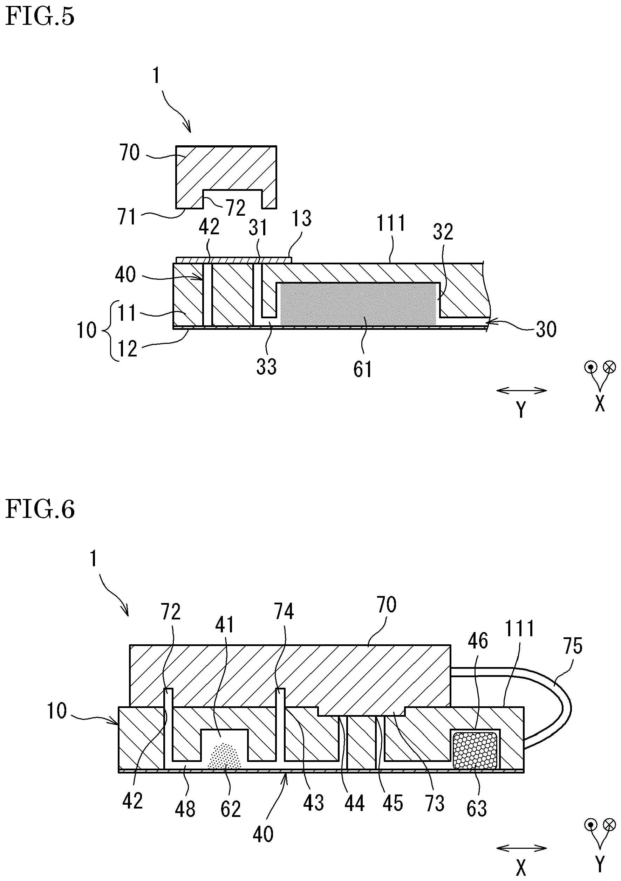

Fig. 5 is a sectional view schematically showing the microchannel device 1, taken along the Y direction. The first groove 72 has a recessed groove-like shape, and is arranged in a corresponding manner between the first connection port 31 and the second connection port 42 in the chip body 10. As shown in Fig. 2, the first groove 72 extends linearly over the first connection port 31 and the second connection port 42, both of which are aligned on the same line extending in the Y direction.

The second groove 74 has a recessed groove-like shape, as shown in Fig. 1, and is arranged in a corresponding manner between the third connection port 43 and the sixth connection port 51 in the chip body 10. The second groove 74 extends linearly over the third connection port 43 and the sixth connection port 51, both of which are aligned on the same line extending in the Y direction.

The lid member 70 further has a protrusion 73 that protrudes downwardly from the contact surface 71. The position of the protrusion 73 corresponds to that of the recessed communication part 47 formed in the chip body 10. A projecting shape of the protrusion 73 corresponds to the shape of the communication part 47 in the chip body 10.

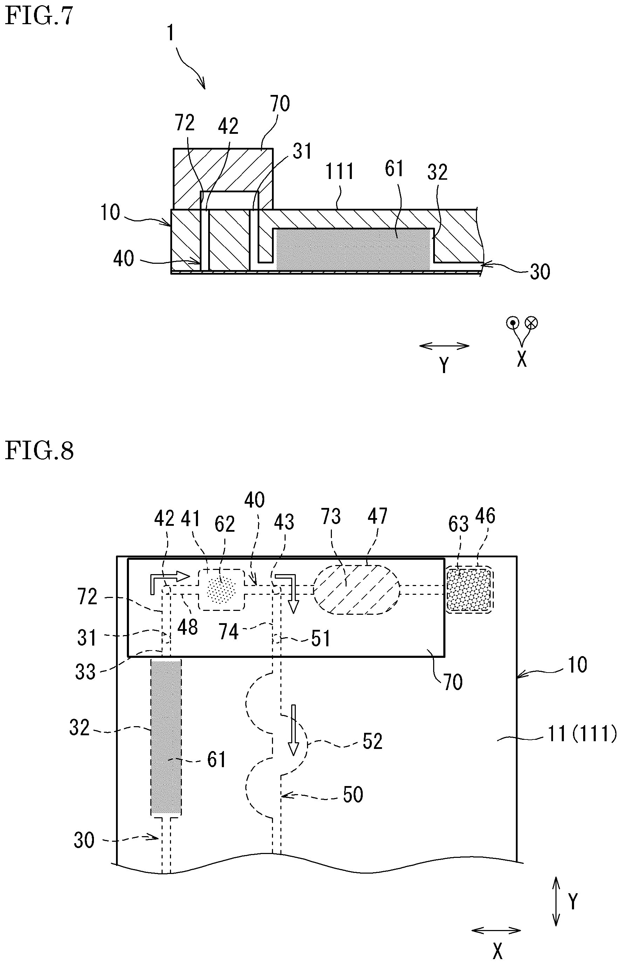

Fig. 6 is a sectional view taken along the X direction, with the lid member 70 attached to the chip body 10. Fig. 7 is a sectional view taken along the Y direction, with the lid member 70 attached to the chip body 10. Fig. 8 is a plan view for explaining the microchannel device 1 in use.

The lid member 70 is attached to the chip body 10 from which the cover tape 13 has been removed from the top surface 111. With the lid member 70 attached to the chip body 10, the first groove 72 in the lid member 70 connects the first connection port 31 to the second connection port 42 in the Y direction, as shown in Fig. 8. The first channel system 30 and the second channel system 40 communicate with each other, as shown in Fig. 7, via the first groove 72 in the lid member 70.

As shown in Fig. 8, the second groove 74 in the lid member 70 connects the third connection port 43 in the second channel system 40 to the sixth connection port 51 in the third channel system 50 in the Y direction. The second channel system 40 and the third channel system 50 thus communicate with each other via the second groove 74.

As shown in Fig. 6 and Fig. 8, the protrusion 73 of the lid member 70 fits in the recessed communication part 47 that communicates with the dry reagent holder 41 and the desiccant holder 46. The protrusion 73 tightly contacts and seals the fourth connection port 44 and the fifth connection port 45. The protrusion 73 shuts off the communication between the dry reagent holder 41 and the desiccant holder 46.

As shown in Fig. 8, the thus configured microchannel device 1 allows communication between the liquid holder 32 in the first channel system 30 and the dry reagent holder 41 in the second channel system 40, and thereby allows the liquid reagent 61 in the liquid holder 32 to be combined with the dry reagent 62. The liquid reagent 61 flows out of the liquid holder 32, flows through the first connection port 31 to the first groove 72 in the lid member 70, and flows through the second connection port 42 in the second channel system 40 into the dry reagent holder 41, where the liquid reagent 61 contacts and combines with the dry reagent 62. The liquid reagent 61 and the dry reagent 62 flow further downstream through the third connection port 43 to the second groove 74 in the lid member 70, flow through the sixth connection port 51 in the third channel system 50, and flow into the mixing channel 52, where the liquid reagent 61 and the dry reagent 62 can mix with each other while flowing.

In the second channel system 40, as shown in Fig. 6, the protrusion 73 of the lid member 70 closes the fourth connection port 44 and the fifth connection port 45, and shuts off the communication between the dry reagent holder 41 and the desiccant holder 46. Accordingly, the liquid reagent 61 and the dry reagent 62, as combined, can be led to the third channel system 50.

The thus configured microchannel device 1 can store the liquid reagent 61 and the dry reagent 62 in the chip body 10 at room temperature, with suitably holding the liquid reagent 61 in a non-dry state in the liquid holder 32 and suitably holding the dry reagent 62 in a dry state in the dry reagent holder 41. The operation for using the microchannel device 1 is so simple as to remove the cover tape 13 from the chip body 10 and to attach the lid member 70 to the chip body 10. This simple operation allows the liquid holder 32 and the dry reagent holder 41 to communicate with each other easily, allows the liquid reagent 61 to combine with the dry reagent 62, and thereby enables quick implementation of a test or the like. Eventually, the microchannel device 1 can be formed in a simple structure, at a reduced production cost, in a smaller size.

Note that the chip body 10 and the lid member 70 are not necessarily joined by the joint 75 but may be provided otherwise. The lid member 70 may be provided in advance on the apparatus side of an analytical instrument or the like to which the chip body 10 is attached. Also note that the linear arrangement of the first channel system 30, the second channel system 40, and the third channel system 50 in the X direction or the Y direction is presented merely as an example of the overall arrangement. Alternatively, each of the channel systems may have any shape and any cross section such as a rectangular cross section or a circular cross section.

### (Embodiment 2)

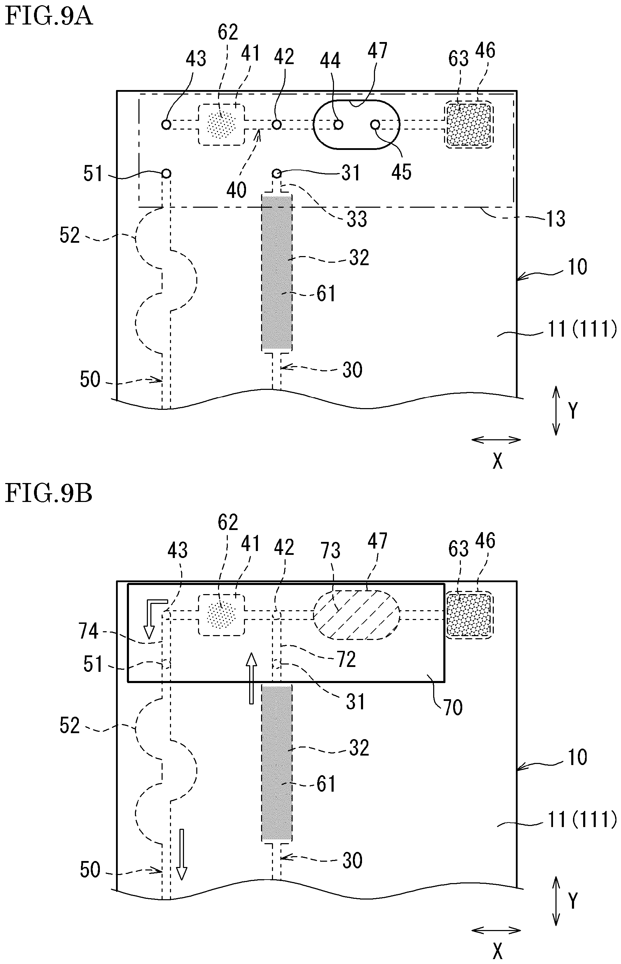

Fig. 9A is a plan view schematically showing a main part of a chip body 10 of a microchannel device 1 according to Embodiment 2 of the present invention. Fig. 9B is a plan view for explaining the microchannel device 1 in use.

Embodiments 2 to 5 to be described below are common to Embodiment 1 as to the basic configurations of the microchannel device 1. Hence, the following description will detail characteristic configurations of each Embodiment, and will omit the description of the other configurations by sharing the reference signs used in Embodiment 1, etc.

In the microchannel device 1, the layout of the first channel system 30, the second channel system 40, and the third channel system 50 is not limited to the one described in Embodiment 1. In Embodiment 1, the third channel system 50 is communicably arranged between the dry reagent holder 41 and the desiccant holder 46 in the second channel system 40. In Embodiment 2, the first channel system 30 is communicably arranged between the dry reagent holder 41 and the desiccant holder 46.

As shown in Fig. 9A, the second connection port 42 in the second channel system 40 is provided between the dry reagent holder 41 and the fourth connection port 44 that opens to the communication part 47. The first connection port 31 in the first channel system 30 is aligned on a Y-direction extension of the second connection port 42.

The third connection port 43 in the second channel system 40 is provided on one side of the dry reagent holder 41 that is a side not facing the desiccant holder 46 and that is an outer side of the chip body 10 in the X direction. The sixth connection port 51 in the third channel system 50 is aligned on a Y-direction extension of the third connection port 43. In this case, the second connection port 42 provided between the dry reagent holder 41 and the desiccant holder 46 is on the upstream side in the second channel system 40.

Fig. 9B shows the state where the lid member 70 is attached to the chip body 10 from which the cover tape 13 has been removed. In this state, the protrusion 73 of the lid member 70 fits in the communication part 47, and shuts off the communication between the dry reagent holder 41 and the desiccant holder 46. The first connection port 31 in the first channel system 30 communicates with the second connection port 42 in the second channel system 40 via the first groove 72 in the lid member 70. The third connection port 43 in the second channel system 40 communicates with the sixth connection port 51 in the third channel system 50 via the second groove 74 in the lid member 70. As a result, the channels from the liquid holder 32 in the first channel system 30, through the dry reagent holder 41 in the second channel system 40, to the mixing channel 52 in the third channel system 50 are connected and communicate with each other.

The microchannel device 1 according to Embodiment 2 can also store the liquid reagent 61 and the dry reagent 62 in the chip body 10 at room temperature, with suitably holding the liquid reagent 61 in a non-dry state in the liquid holder 32 and suitably holding the dry reagent 62 in a dry state in the dry reagent holder 41. The operation for using the microchannel device 1 is so simple as to remove the cover tape 13 and to attach the lid member 70 to the chip body 10. This simple operation allows the liquid reagent 61 to combine with the dry reagent 62.

### (Embodiment 3)

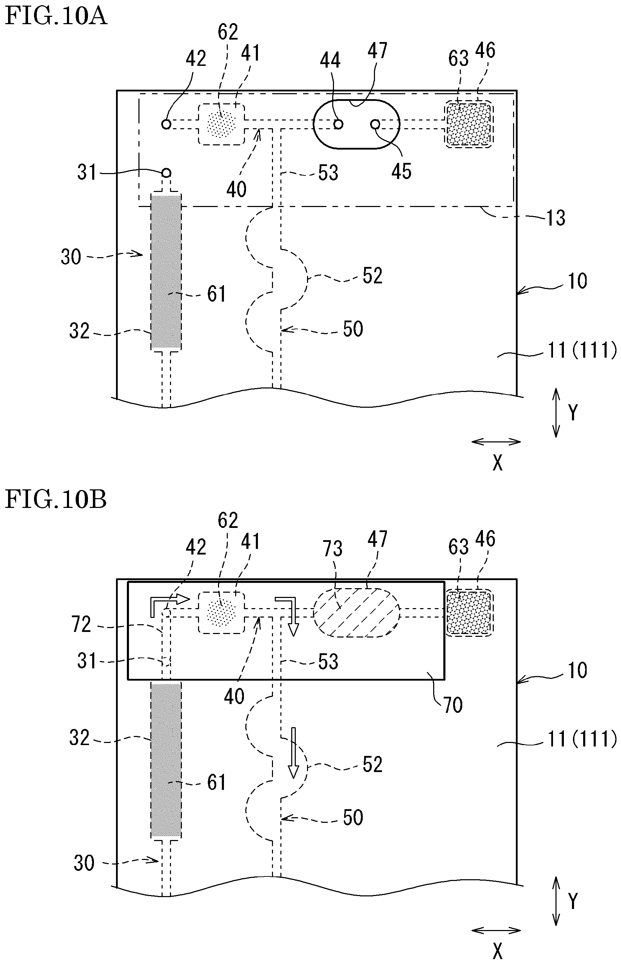

Fig. 10A is a plan view schematically showing a main part of a chip body 10 of a microchannel device 1 according to Embodiment 3 of the present invention. Fig. 10B is a plan view for explaining the microchannel device 1 in use.

In Embodiment 1, the third channel system 50 is arranged to communicate with the second channel system 40 via the second groove 74 in the lid member 70. Alternatively, the third channel system 50 may be arranged to communicate with the second channel system 40, as described in this Embodiment.

As shown in Fig. 10A, the third channel system 50 is connected to the second channel system 40 between the dry reagent holder 41 and the desiccant holder 46. To be more specific, an upstream channel 53 extends upstream of the mixing channel 52 in the third channel system 50, and communicates with the second channel system 40 between the dry reagent holder 41 and the communication part 47.

In the case shown in Fig. 10B, the second channel system 40 does not have the third connection port 43, and the lid member 70 does not have the second groove 74. When the lid member 70 is attached to the chip body 10 from which the cover tape 13 has been removed, the protrusion 73 of the lid member 70 fits in the communication part 47, and shuts off the communication between the dry reagent holder 41 and the desiccant holder 46. At the same time, the first connection port 31 in the first channel system 30 communicates with the second connection port 42 in the second channel system 40 via the first groove 72 in the lid member 70. As a result, the channels from the liquid holder 32 in the first channel system 30, through the dry reagent holder 41 in the second channel system 40, to the mixing channel 52 in the third channel system 50 are connected and communicate with each other.

Similar to the foregoing Embodiments, the microchannel device 1 according to Embodiment 3 can also store the liquid reagent 61 and the dry reagent 62 in the chip body 10 at room temperature, with suitably holding the liquid reagent 61 in a non-dry state in the liquid holder 32 and suitably holding the dry reagent 62 in a dry state in the dry reagent holder 41. The operation for using the microchannel device 1 is so simple as to remove the cover tape 13 and to attach the lid member 70 to the chip body 10. This simple operation allows the liquid reagent 61 to combine with the dry reagent 62. Additionally, the microchannel device 1 can be made simpler by omitting the second groove 74 in the lid member 70.

### (Embodiment 4)

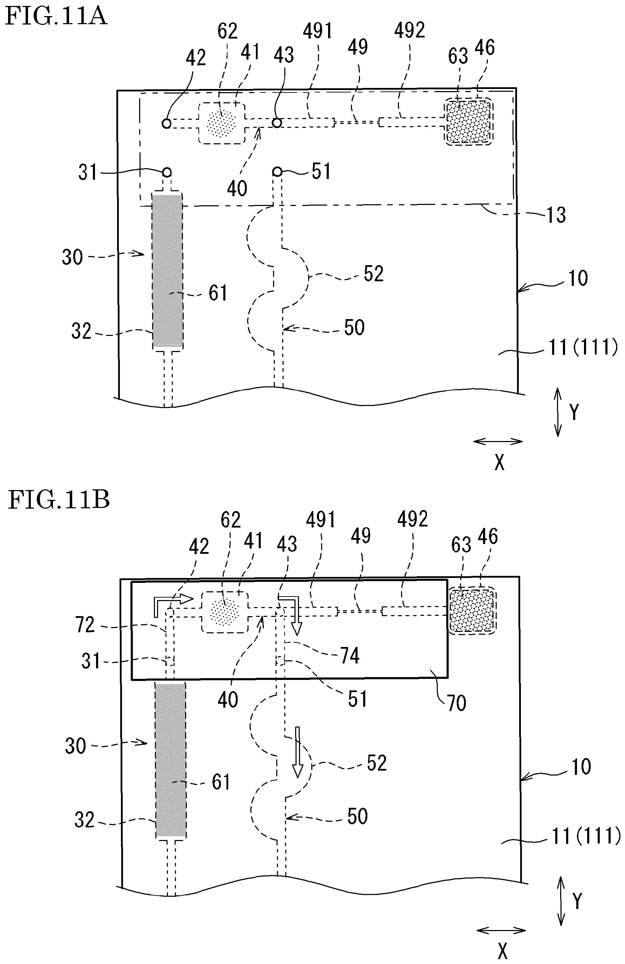

Fig. 11A is a plan view schematically showing a main part of a chip body 10 of a microchannel device 1 according to Embodiment 4 of the present invention. Fig. 11B is a plan view for explaining the microchannel device 1 in use.

In Embodiment 1, the second channel system 40 includes the recessed communication part 47 between the dry reagent holder 41 and the desiccant holder 46, and the protrusion 73 of the lid member 70 fits in the communication part 47 and thereby shuts off the communication between the dry reagent holder 41 and the desiccant holder 46. In the microchannel device 1 according to this Embodiment, a constricted part 49 that shows a high flow resistance is provided between the dry reagent holder 41 and the desiccant holder 46.

As shown in Fig. 11A, the second channel system 40 includes the constricted part 49 on the downstream side (the third connection port 43 side) of the dry reagent holder 41. The constricted part 49 has a constricted channel cross section. For example, the cross-sectional area of the constricted part 49, taken orthogonally to the X direction that is a liquid delivery direction, is smaller than that of an upstream channel 491 of the constricted part 49 and smaller than that of a downstream channel 492 between the constricted part 49 and the desiccant holder 46. This configuration ensures the communication between the dry reagent holder 41 and the desiccant holder 46 to keep the dry reagent 62 in a dry state. At the same time, this configuration increases the flow resistance from the upstream channel 491 toward the constricted part 49 to prevent entry of the liquid reagent 61 or the like. In this case, the lid member 70 does not have the protrusion 73.

Fig. 11B shows the state where the lid member 70 is attached to the chip body 10 from which the cover tape 13 has been removed. In this state, the first connection port 31 in the first channel system 30 communicates with the second connection port 42 in the second channel system 40 via the first groove 72 in the lid member 70, and the third connection port 43 in the second channel system 40 communicates with the sixth connection port 51 in the third channel system 50 via the second groove 74 in the lid member 70. As a result, the channels from the liquid holder 32 in the first channel system 30, through the dry reagent holder 41 in the second channel system 40, to the mixing channel 52 in the third channel system 50 are connected and communicate with each other.

Similar to the foregoing Embodiments, the microchannel device 1 according to Embodiment 4 can also store the liquid reagent 61 and the dry reagent 62 in the chip body 10 at room temperature, with suitably holding the liquid reagent 61 in a non-dry state in the liquid holder 32 and suitably holding the dry reagent 62 in a dry state in the dry reagent holder 41. The operation for using the microchannel device 1 is so simple as to remove the cover tape 13 and to attach the lid member 70 to the chip body 10. This simple operation allows the liquid reagent 61 to combine with the dry reagent 62. Additionally, the microchannel device 1 can be made simpler by omitting the protrusion 73 in the lid member 70 and omitting the fourth connection port 44, the fifth connection port 45, and the communication part 47 in the chip body 10.

### (Embodiment 5)

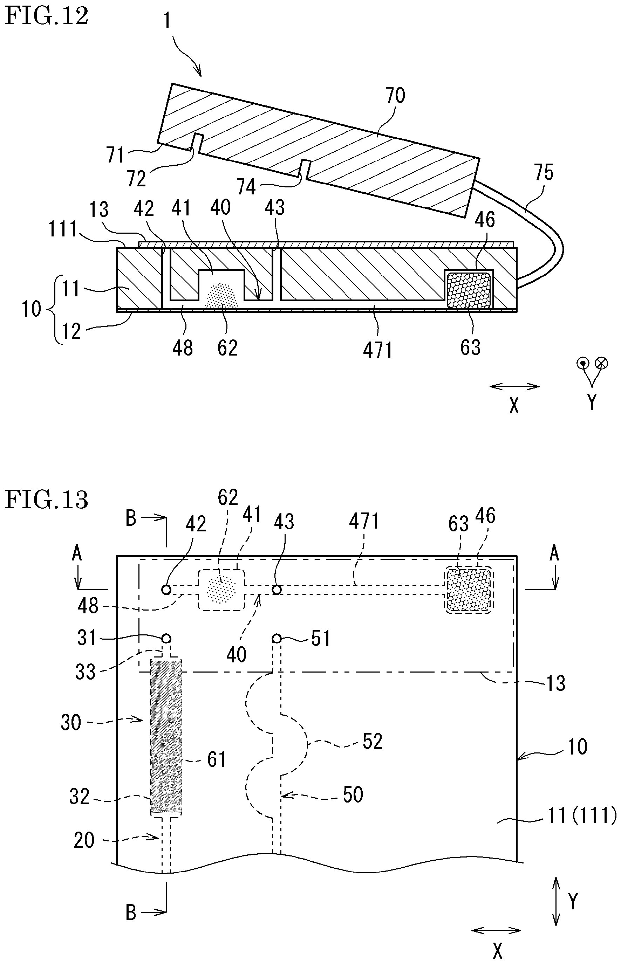

Fig. 12 is a sectional view schematically showing a microchannel device 1 according to Embodiment 5 of the present invention. Fig. 13 is a plan view showing a main part of a chip body 10 of the microchannel device 1.

The microchannel device 1 can adopt various configurations between the dry reagent holder 41 and the desiccant holder 46. In Embodiment 1, the recessed communication part 47 is provided between the dry reagent holder 41 and the desiccant holder 46, and the protrusion 73 of the lid member 70 shuts off the communication between the dry reagent holder 41 and the desiccant holder 46. In Embodiment 4, the constricted part 49 that shows a high flow resistance is provided as a constriction between the dry reagent holder 41 and the desiccant holder 46. Actually, the microchannel device 1 according to the present invention does not necessarily adopt the above-mentioned shuttable or constricted configuration between the dry reagent holder 41 and the desiccant holder 46 in the second channel system 40. Alternatively, the dry reagent holder 41 and the desiccant holder 46 may be communicable without constriction or the like.

For example, as shown in Fig. 12, the microchannel device 1 according to Embodiment 5 has a downstream channel 471 in the second channel system 40, and the dry reagent holder 41 and the desiccant holder 46 communicate with each other via the downstream channel 471. The downstream channel 471 extends in the X direction that is a liquid delivery direction. The inner diameter of the downstream channel 471 is equal to that of the upstream channel 42. The second connection port 42 and the third connection port 43 in the second channel system 40 are covered by the cover tape 13. In this state, the first channel system 30 and the second channel system 40 are shut off from each other.

In the second channel system 40 shown in Fig. 13, the upstream channel 48 communicates with the second connection port 42. The dry reagent holder 41 communicates with the upstream channel 48 and encapsulates the dry reagent 62. The dry reagent holder 41 communicates with the desiccant holder 46 via the downstream channel 471. This configuration ensures the communication between the dry reagent holder 41 and the desiccant holder 46 to hold the dry reagent 62 in a dry state. The lid member 70 does not have the protrusion 73.

In this case, the microchannel 20 does not extend downstream of the desiccant holder 46, and the desiccant holder 46 is the downstream end of the second channel system 40. Owing to this configuration, when the dry reagent holder 41 and the desiccant holder 46 communicate with each other via the downstream channel 471 without any shut-off structure or constricted structure, the combined liquid reagent 61 and dry reagent 62 are unlikely to flow into the desiccant holder 46 and are led to the third channel system 50.

Similar to the foregoing Embodiments, the microchannel device 1 according to Embodiment 5 can also store the liquid reagent 61 and the dry reagent 62 in the chip body 10 at room temperature, with suitably holding the liquid reagent 61 in a non-dry state in the liquid holder 32 and suitably holding the dry reagent 62 in a dry state in the dry reagent holder 41. Additionally, the microchannel device 1 can be made simpler by omitting the protrusion 73 in the lid member 70 and omitting the fourth connection port 44, the fifth connection port 45, the communication part 47, the constricted part 49, or the like in the chip body 10.

The microchannel device 1 configured as above can shut off the liquid holder 32 that holds the liquid reagent 61 and the dry reagent holder 41 that holds the dry reagent 62 from each other, and can thereby store the liquid reagent 61 in a non-dry state and store the dry reagent 62 in a dry state. In use, the microchannel device 1 can easily allow the liquid holder 32 and the dry reagent holder 41 to communicate with each other, and can combine the liquid reagent 61 with the dry reagent 62. The microchannel device 1 can thus enhance its usability.

The microchannel device 1 according to the present invention can be particularly suitable for use as a microchannel device for nucleic acid amplification. Various nucleic acid amplification methods including the polymerase chain reaction (PCR) method are adopted in the fields of medicine, biochemistry, etc. as a method for amplifying a target nucleic acid sequence. Nucleic acid amplification is conducted in a reaction liquid that contains polymerase, a nucleic acid monomer such as dNTP, a primer, and a buffering agent such as tris(hydroxymethyl)aminomethane, etc. The microchannel device for nucleic acid amplification is required to purify a nucleic acid with the liquid reagent 61 that is an encapsulated washing liquid, recovery liquid, etc. and to amplify the nucleic acid with an enzyme. The enzyme can be stored in a liquid state under refrigeration, but must be stored in a dry state under ambient temperature (room temperature). In this case, the microchannel device contains a dry enzyme as the dry reagent 62. For this application, the microchannel device 1 can keep the liquid reagent 61 in a non-dry state and can keep the dry reagent 62 in a dry state. In use, the microchannel device 1 allows the liquid holder 32 and the dry reagent holder 41 to communicate with each other easily, and allows the liquid reagent 61 to combine with the dry reagent 62. The microchannel device 1 is hence advantageous in terms of storage, ease of distribution, usability, etc.

Note that the microchannel device 1 according to the present invention is not limited to the configurations described in the above Embodiments but can be embodied in other various forms. The liquid to be held in the liquid holder 32 and delivered therefrom is not limited to the liquid reagent 61, but may be, for example, water or any liquid. The sealing member is not limited to the cover tape 13, but may be a thermal bonding film or the like.

The technical scope of the present invention should not be construed only on the basis of the foregoing Embodiments but should be construed on the basis of the appended claims. The technical scope of the present invention is intended to encompass all variations and modifications falling within the equivalency range of the appended claims. This application claims priority to Japanese patent application No. 2021-174604. The contents of this application are incorporated herein by reference in its entirety.

### Reference Signs List

- 1: microchannel device
- 10: chip body
- 11: first substrate
- 111: top surface (contact surface)
- 12: second substrate
- 13: cover tape (sealing member)
- 20: microchannel
- 30: first channel system
- 31: first connection port
- 32: liquid holder
- 33: downstream channel
- 40: second channel system
- 41: dry reagent holder
- 42: second connection port
- 43: third connection port
- 44: fourth connection port
- 45: fifth connection port
- 46: desiccant holder
- 47: communication part
- 471: downstream channel
- 48: upstream channel
- 49: constricted part
- 50: third channel system
- 51: sixth connection port
- 52: mixing channel
- 61: liquid reagent (liquid)
- 62: dry reagent
- 63: desiccant
- 70: lid member
- 71: contact surface
- 72: first groove
- 73: protrusion
- 74: second groove

## Claims

1. A microchannel device comprising: a chip body having a microchannel; and a lid member attachable to the chip body,
wherein the microchannel includes a first channel system having a liquid holder that encapsulates a liquid, and a second channel system having a dry reagent holder that encapsulates a dry reagent, with the first channel system and the second channel system being shut off from each other in the chip body,
wherein the lid member has a first groove formed in a contact surface to face the chip body, and
wherein the lid member, when attached to the chip body, allows the first channel system and the second channel system to communicate with each other via the first groove.

2. The microchannel device according to claim 1,
wherein the chip body has a contact surface to face the lid member, a first connection port that constitutes an end of the first channel system, and a second connection port that constitutes an end of the second channel system, with the first connection port and the second connection port being open to the contact surface to face the lid member, and
wherein the first groove has a recessed groove-like shape configured to connect the first connection port to the second connection port.

3. The microchannel device according to claim 2,
wherein the first connection port and the second connection port are sealed by a sealing member that is adhesive to and removable from the chip body, and
wherein the lid member is attached to the chip body from which the sealing member has been removed.

4. The microchannel device according to claim 1,
wherein the second channel system has a desiccant holder that encapsulates a desiccant and that communicates with the dry reagent holder.

5. The microchannel device according to claim 4,
wherein the lid member, when attached, shuts off the communication between the dry reagent holder and the desiccant holder.

6. The microchannel device according to claim 5,
wherein the lid member has a protrusion formed on the contact surface to face the chip body,
wherein the chip body has a recessed communication part that is formed in a contact surface to face the lid member and that communicates with the dry reagent holder and the desiccant holder, and
wherein the protrusion, when fitting in the communication part, shuts off the communication.

7. The microchannel device according to claim 4,
further comprising a constricted part that shows a high flow resistance and that is provided between the dry reagent holder and the desiccant holder.

8. The microchannel device according to claim 1,
wherein the microchannel further includes a third channel system provided downstream of the dry reagent holder in the second channel system that is provided downstream of the first channel system.

9. The microchannel device according to claim 8,
wherein the third channel system and the second channel system are shut off from each other in the chip body,
wherein the lid member has a recessed second groove formed in the contact surface to face the chip body, and
wherein the lid member, when attached to the chip body, allows the third channel system and the second channel system to communicate with each other via the second groove.

10. The microchannel device according to claim 8,
wherein the third channel system communicates with the second channel system by being connected to the second channel system between the dry reagent holder and the desiccant holder.
